# EUROPÄISCHE PATENTSCHRIFT

(11) **EP 1 026 041 B1**
(45) Veröffentlichungstag und Bekanntmachung des Hinweises auf die Patenterteilung: **10.09.2003**
(21) Anmeldenummer: 00100293.0
(22) Anmeldetag: 20.01.2000
(51) Int. Cl.: B60R 16/02

(54) **Bedieneinheit, insbesondere multifunktionale Bedieneinheit**
Control unit, in particular multifunctional control unit
Unité de commande, en particulier unité de commande multifonction

(30) Priorität: 04.02.1999 DE 19904519
(43) Veröffentlichungstag der Anmeldung: 09.08.2000
(73) Patentinhaber: Volkswagen Aktiengesellschaft, 38436 Wolfsburg (DE)
(72) Erfinder: Golisch, Frank, Dipl.-Ing., 38108 Braunschweig (DE); Dobberkau, Thomas, 38527 Meine (DE); Kriegel, Dieter, Dipl.-Ing., 38528 Adenbüttel (DE); Sievers, Stefan, 38553 Wasbüttel (DE)

(56) Entgegenhaltungen:
- EP-A- 0 448 984
- EP-A- 0 855 311
- DE-C- 3 514 438
- DE-C- 4 338 171
- US-A- 5 239 700
- US-A- 5 555 502

## Beschreibung

Die Erfindung betrifft eine Bedieneinheit, insbesondere eine multifunktionale Bedieneinheit für Kraftfahrzeuge mit einer Anzeigeeinheit bspw einem Display, sowie mit Funktionstasten, gemäß Oberbegriff des Patentanspruches 1.

Bedieneinheiten dieser Art sind im Kraftfahrzeugbereich vielfach eingesetzt (8.8 DE 3514438). Sie dienen dabei zur Bedienung fahrzeuginterner Geräte, ggf. auch zur Bedienung der neuerdings in Kraftfahrzeugen vorgesehenen Navigationseinheit.

Darüber hinaus werden vielfach Displayelemente mehr und mehr in Kraftfahrzeugen eingesetzt. Zu diesem Zweck faßt man bestimmte Funktionen verschiedener Geräte auf dem Display so zusammen, daß man über fest vorgegebenen Funktionstasten, wie beispielsweise Radio, Bordcomputer, Telefon, Navigationssystem, Klimaanlage u. a. ein entsprechendes Bedienmenü oder eine entsprechende Anzeige auf dem Display generiert. Hierzu sind dann zusätzlich zum Display entsprechend fest belegte Funktionstasten vorgesehen, mit denen dann die entsprechend nunmehr korrespondierenden Geräte zusammenwirken. Das entsprechend beaufschlagte Gerät projiziert dann seine jeweilige Anzeige auf das Display des multifunktionalen Bedienelementes.

So ist aus der EP 0 701 926 A2 bekannt, an besagtem multifunktionalen Bedienelement eine Mehrzahl von Funktionstasten um das Display herum anzuordnen. Diese Funktionstasten haben dabei jeweils eine feste invariable funktionelle Belegung und sind zu diesem Zweck zumeist schon beschriftet oder mit einem beleuchteten Schriftzug versehen. Nachteilig ist hierbei, daß die Funktionsbelegung der besagten Funktionstasten festgelegt ist, was dazu führt, daß die multifunktionalen Bedienelemente nicht uniform gefertigt werden können, sondern je nach Ausstattung des Fahrzeuges mehr oder weniger Funktionstasten aufweisen.

Aus der EP 0 556 295 B1 ist im übrigen auch bekannt sog. Funktionstasten auch bei Computern zu verwenden.

Die oben dargestellte Problematik nach der wunschgemäß uniformen Vorfertigung jedoch mit der Möglichkeit trotzdem einer individuellen Ausstattung jedes Fahrzeuges ist mit dem dargestellten Stand der Technik nicht lösbar.

Der Erfindung liegt somit die Aufgabe zugrunde, eine multifunktionale Bedieneinheit der gattungsgemäßen Art dahingehend weiterzubilden, daß unter nahezu uniformer Ausgestaltung einer solchen Bedieneinheit dieselbe auch bei unterschiedlichen Fahrzeugausstattungen besser und optimaler einsetzbar ist.

Die gestellte Aufgabe wird bei einer multifunktionalen Bedieneinheit der gattungsgemäßen Art erfindungsgemäß durch die kennzeichnenden Merkmale des Patentanspruches 1 gelöst.

Weitere vorteilhafte Ausgestaltungen der Erfindung sind in den abhängigen Ansprüchen angegeben.

Kern der Erfindung besteht darin, nun über die fest vorgegebenen Funktions- oder Befehlstasten hinaus mindestens eine weitere frei programmierbare und makro-befehlsfähige Funktions- oder Befehlstaste vorzusehen, über welche mindestens eine weitere Gerätekomponente im Kraftfahrzeug ansteuerbar ist.

Aus der DE 39 42 311 A1 ist zwar eine Bedienvorrichtung für Mikroprozessor gesteuerte Geräte im allgemeinen bekannt, bei der sog. Soft-Keys vorgesehen sind. Diese Soft-Keys lassen sich mit entsprechenden Gerätefunktionen belegen.

Bei der vorliegenden Erfindung geht es jedoch nicht darum, die Bedieneinheit als solches in ihrer Funktion für sich gesehen zu verändern, sondern die multifunktionale Bedieneinheit auf die Ansteuerung und Anzeige bzw. Korrespondenz mit weiteren Geräten auszulegen.

In vorteilhafter Ausgestaltung der Erfindung ist angegeben, daß die genannte weitere, nunmehr frei programmierbare makro-befehlsfähige Funktionstaste direkt auf dem Bedienpanel der multifunktionalen Bedieneinheit angeordnet ist. Dadurch entsteht die räumliche Nähe zu demjenigen Display, auf welchem nunmehr die jeweilige Anzeige aller Geräte, die mit den entsprechend zusätzlichen Befehlstasten ansprechbar sind, auch in der Nähe dieser Tasten projiziert wird.

Weitergehend ist vorteilhaft vorgegeben, daß die Bedieneinheit, die der Navigationseinrichtung ist. Da für die Navigationseinrichtung ohnehin ein Display, demzufolge ein frei programmierbares Display notwendig ist, ist dies eine zweckmäßige Verbindung, die außer der entsprechend logischen Verschaltung, keine weiteren Mittel notwendig macht.

In weiterer vorteilhafter Ausgestaltung der Erfindung ist vorgesehen, daß die Programmierung der zusätzlichen frei programmierbaren Befehlstasten mit Hilfe der übrigen Bedientasten und des Displays erfolgt. Hierdurch kann erreicht werden, daß die Programmierung der zusätzlichen frei programmierbaren Befehlstasten auf einfache Weise möglich ist. Außerdem wird in den Programmiermodus auch wiederum das Display miteinbezogen, so daß jeder Programmierschritt und jede Belegung entsprechend verfolgt werden kann und ggf. sogar korrigierbar ist.

Hierüber ist es auch möglich, eine Befehlskette zu erstellen, die sodann auf die entsprechende programmierbare Befehlstaste gelegt werden kann. Eine solche Befehlskette wird dann Makrobefehl genannt, so daß die erfindungsgemäß vorgesehenen weiteren Befehlstasten nicht nur für weitere Geräte vorsehbar sind, sondern auch um bestimmte Befehlsketten, die man ansonsten durch mehrere Tasten generieren müßte, nunmehr auf einen Tastendruck hin generieren zu können.

Eine solche entsprechende Tastenbelegung hat natürlich auch die Konsequenz, gewisse Betätigungsvorgänge im Fahrzeug derart zu vereinfachen, daß der Fahrzeugführer keine Ablenkung vom übrigen Verkehrsgeschehen erfährt. Dies erfüllt somit auch einen hohen Sicherheitsstandard.

Weitergehend ist vorteilhaft vorgeschlagen, daß die frei programmierbaren Befehlstasten sog. Touch-Screen-Tasten auf dem Display sind. Auf diese Weise ist es natürlich möglich, eine beliebige Anzahl von weiteren und frei programmierbaren Befehlstasten zu generieren, die sodann auf dem Bildschirm lediglich virtuell, aber durch die Touch-Screen-Funktion auch durch Berührung betätigbar sind.

In weiterer vorteilhafter Ausgestaltung der Erfindung ist angegeben, daß alle umliegenden Geräte im Fahrzeug auf diese Weise ansteuerbar sind.

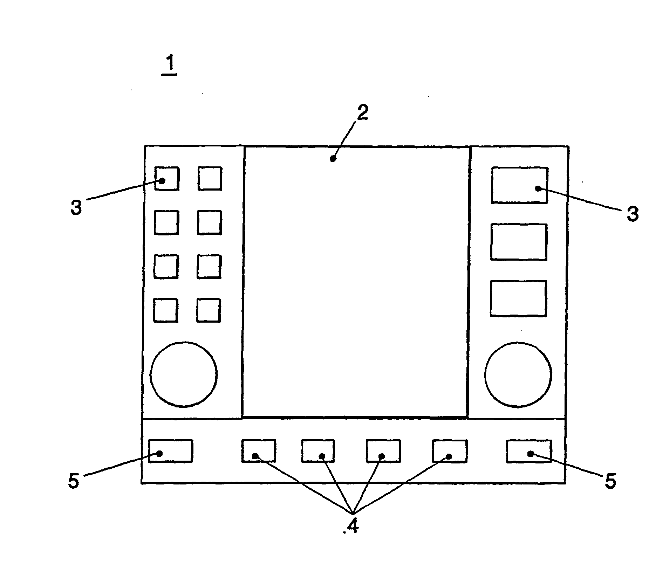

Die Erfindung ist in der Zeichnung dargestellt und nachfolgend näher beschrieben.

Die Abbildung zeigt ein multifunktionales Bedienelement oder eine Bedieneinheit für ein Kraftfahrzeug. Das Bedienpanel 1 ist baulich zu einer Einheit zusammengefaßt und enthält mittig ein Display 2. Um dieses Display 2 herum sind Bedientasten 3 auf beiden Seiten vorgesehen, wobei außer Bedientasten in Form von Tipptastem auch Drehbetätigungselemente vorgesehen sein können.

In diesem Ausführungsbeispiel ist darüber hinausgehend unterhalb des Displays 2 eine Funktionsleiste mit Funktionstasten 4 vorgesehen: Die besagten Funktionstasten 4 haben dabei eine feste Belegung, wie beispielsweise Radio, Bordcomputer, Telefon, Navigationseinheit, etc. Werden diese betätigt, so wird das entsprechende Display 2 dem entsprechenden Gerät zugewiesen und das Gerät bringt seinen derzeitigen Betriebsstatus auf dem Display 2 zur Anzeige. Das heißt, es erscheint auf dem Display bei Betätigen der Radiotaste beispielsweise der aktuelle Sender, sowie abgespeicherte Sender und dgl. mehr.

Darüber hinausgehend sind in diesem Beispiel links und rechts der Funktionstasten 4 weitere frei programmierbare, und ggfs auch makro-befehlsfähige Funktionstasten 5 vorgesehen. Diese Tasten können nunmehr über eine freie Programmierung einem Gerät im Fahrzeug zugewiesen werden, welches seinen jeweiligen Betriebsstatus dann auf Tastendruck wieder auf dem Display 2 zur Anzeige bringt. Auf diese Weise kann unabhängig von der Ausstattung ein uniformes, multifunktionales Bedienelement verwendet werden, weil weitere Ausstattungen im Fahrzeug in ihrer Bedienung und Belegung frei programmierbar sind.

Eine weitere Möglichkeit besteht darin, auch Makro-befehlsketten für bestehende und von der Bedieneinheit bereits erfaßte Geräte zu programmieren. Solche Makro-befehlsketten können beispielsweise bestimmte Einstellungen in der Betätigung und in der Anzeige der Navigationseinrichtung sein, oder des Bordcomputers oder beispielsweise des Radios, wobei dann bei entsprechender Programmierung und Betätigung dieser Funktionstaste nicht nur das Radio eingeschaltet wird, sondern beispielsweise eine bereits vorher programmierte Senderfestlegung mit Anzeige der Verkehrsfunksender etc. gleichzeitig generiert werden kann.

Die Zusammenstellbarkeit von Makrobefehlen mit der entsprechenden Belegung auf den frei programmierbaren Befehls- oder Funktionstasten 5 ermöglicht eine einfache Bedienung der Geräte im Kraftfahrzeug, die nur noch ein Minimum an Aufmerksamkeit des Fahrzeugführers erfordert.

Außerdem läßt sich ein quasi uniform erstelltes Gerät in vorteilhafter Weise an verschiedene individuelle Ausgestaltungswünsche besser anpassen. Auch nachträgliche Veränderungen an der Ausstattung durch Erweiterung oder Austausch von Geräten läßt sich so auf erfindungsgemäß einfache Weise handhaben und neue Funktionen programmieren und eine entsprechende Tastenzuweisung vornehmen.

## Patentansprüche

1. Bedieneinheit (1), insbesondere Multifunctions-Bedieneinheit, für kraftfahrzeuge mit einer Anzeigeeinheit (2), beispielsweise einem Display, sowie mit Funktionstasten (3) mit einer festen invariablen funktionellen Belegung , wobei über die Funktionstasten (3) hinaus mindestens eine weitere frei programmierbare Befehlstaste (5) vorgesehen ist; über welche mindestens eine Gerätekomponente im kraftfahrzeug insbesondere des navigationssystems oder der klimaanlage, ansteuerbar ist; **dadurch gekennzeichnet, dass** die mindestens eine weitere frei programmierbare Befehlstaste eine makrobefehlsfähige Befehlstaste ist.

2. Bedieneinheit nach Anspruch 1, **dadurch gekennzeichnet, daß** die besagte Befehlstaste (5) auf der Bedienfläche der Bedieneinheit (1) angeordnet ist.

3. Bedieneinheit nach einem der vorhergehenden Ansprüche, **dadurch gekennzeichnet, daß** die Programmierung mit Hilfe der Bedientasten (3) und der Anzeigeeinheit (2) erfolgt.

4. Bedieneinheit nach einem der vorhergehenden Ansprüche, **dadurch gekennzeichnet, daß** die frei programmierbaren makrobefehlsfähigen Befehlstasten (5) Touch-Screen-Tasten auf der Anzegeeinheit (2) sind.

## Claims

1. Control unit (1), in particular multifunctional control unit, for motor vehicles having a display unit (2), for example a display, and having function keys (3) with a fixed invariable functional assignment, at least one further, freely programmable command key (5), via which at least one device component in the motor vehicle, in particular the navigation system or the air-conditioning system, can be actuated, being provided in addition to the function keys (3), **characterized in that** the at least one further, freely programmable command key is a macro command-enabled command key.

2. Control unit according to Claim 1, **characterized in that** the aforesaid command key (5) is arranged on the operator interface of the control unit (1).

3. Control unit according to one of the preceding claims, **characterized in that** the programming is carried out using the control keys (3) and the display unit (2).

4. Control unit according to one of the preceding claims, **characterized in that** the freely programmable, macro command-enabled command keys (5) are touch screen keys on the display unit (2).

## Revendications

1. Unité de commande (1), en particulier unité de commande multifonction pour véhicules automobiles, avec une unité d'affichage (2), par exemple un écran, et des touches de fonction (3) à affectation fonctionnelle fixe et invariable, au moins une autre touche de commande (5) librement programmable étant prévue, par intervention sur laquelle au moins un composant d'appareil dans le véhicule automobile, en particulier du système de navigation ou de l'installation de climatisation, est activable, **caractérisée en ce que** l'au moins une autre touche de commande librement programmable est une touche de commande capable d'exécuter des macro-instructions.

2. Unité de commande selon la revendication 1, **caractérisée en ce que** ladite touche de commande (5) est disposée sur la surface de commande de l'unité de commande (1).

3. Unité de commande selon l'une des revendications qui précèdent, **caractérisée en ce que** la programmation se fait à l'aide des touches de commande (3) et de l'unité d'affichage (2).

4. Unité de commande selon l'une des revendications qui précèdent, **caractérisée en ce que** les touches de commande capables d'exécuter des macro-instructions et librement programmables (5) sont des touches d'écran tactile de l'unité d'affichage (2).
